# EUROPÄISCHE PATENTANMELDUNG

(11) **EP 2 164 001 A1**
(43) Veröffentlichungstag der Anmeldung: **17.03.2010**
(21) Anmeldenummer: 08016199.5
(22) Anmeldetag: 15.09.2008
(51) Int. Cl.: G06F 17/21, G06F 3/12, G06F 17/30

(54) **Verfahren zur Erzeugung einer Druckdatei**

(71) Anmelder: Deutsche Post AG, 53113 Bonn (DE)
(72) Erfinder: Karakus, Sakine, 51469 Bergisch Gladbach (DE)
(74) Vertreter: Jostarndt, Hans-Dieter

(57) **Zusammenfassung**

Die Erfindung betrifft ein Verfahren zur Erzeugung einer Druckdatei (40), welche wenigstens ein Bildmotiv (41;42;43) enthält, wobei das Bildmotiv (41;42;43) über einen Web-Browser (11;11') wenigstens eines ersten Computersystems (10;10') vor der Erzeugung der Druckdatei (40) auf einer Anzeige (13) des ersten Computersystems (10;10') angezeigt wird, von einer Bildbearbeitungseinheit (23) graphisch bearbeitet wird, welche durch Auswahlbefehle und Bearbeitungsbefehle eines Nutzers an einer Eingabeeinrichtung (12) des ersten Computersystems (10;10') angesteuert wird. Das Verfahren zeichnet sich dadurch aus, dass für eine erste Bilddatei (50) mit hoher Original-Auflösung wenigstens eine weitere Bilddatei (51;52) mit geringerer Auflösung erzeugt und auf einem Applikationsserver (20) hinterlegt wird, über den mehreren Nutzersysteme (10;10') über das Internet (16) Bilddateien zur Ansicht und zur Bearbeitung übermittelt werden. Die Auswahlbefehle eines Nutzers an einer Eingabeeinrichtung (12) werden dahingehend ausgewertet, dass dem Nutzer als Vorschau stets diejenige Bilddatei als aktuelle Arbeitsdatei angezeigt wird, die für den Auswahlbefehl eine geeignete Auflösung aufweist. Die Bearbeitungsbefehle eines Nutzers werden für eine Vorschau auf der aktuellen Arbeitsdatei durchgeführt und anschließend auch auf der Bilddatei (50) mit hoher Auflösung durchgeführt, bevor aus dieser bearbeiteten Bilddatei (50") eine Druckdatei (40) erzeugt wird.

## Beschreibung

Die Erfindung betrifft ein Verfahren zur Erzeugung einer Druckdatei, welche wenigstens ein Bildmotiv enthält, wobei das Bildmotiv über einen Web-Browser wenigstens eines ersten Computersystems vor der Erzeugung der Druckdatei auf einer Anzeige des ersten Computersystems angezeigt und von einer Bildbearbeitungseinheit, welche durch Auswahlbefehle und Bearbeitungsbefehle eines Nutzers an einer Eingabeeinrichtung des ersten Computersystems angesteuert wird, graphisch bearbeitet wird.

Zunehmend besteht der Bedarf nach Online-Anwendungen, über die vorzugsweise mehrere Nutzer angebotene Funktionen nutzen können, um beispielsweise Texte, Tabellen und/oder Bilder zu erstellen und fortlaufend zu bearbeiten. Für den Zugriff auf eine solche web-basierte Applikation benötigt ein Nutzer lediglich einen Internetanschluss und einen Web-Browser auf seinem lokalen Computersystem. Die Funktionen der Applikation werden dem Nutzer über seinen Web-Browser zur Verfügung gestellt. In besonders vorteilhaften Ausgestaltungen ist es dabei möglich, dass mehrere Personen einen Dateninhalt gemeinsam in Echtzeit erstellen und bearbeiten können. Dazu muss ein Moderator üblicherweise lediglich die E-Mail-Adressen der Personen eingeben, mit denen er an einem bestimmten Dokument zusammenarbeiten möchte, wodurch diese Personen eingeladen werden. Jede der eingeladenen Personen kann sich daraufhin anmelden und das freigegebene Dokument lesen und/oder bearbeiten. Dabei geben Dokumentversionen genau an, was, wann und von wem geändert wurde. Die erstellten und bearbeiteten Dateien werden üblicherweise zentral auf einem Server gehalten, sie können jedoch bei Bedarf auch von den beteiligten Personen auf einen lokalen Computer herunter geladen werden.

Über eine solche Online-Anwendung können einer Vielzahl von Nutzern verschiedene Office-Suites verfügbar gemacht werden, wobei es sich bei einer Office-Suite um eine Sammlung von typischen Büroapplikationen handeln kann, die aufeinander abgestimmt sind. Beispielsweise können eine Textverarbeitung, eine Tabellenkalkulation, ein Präsentationsprogramm und/oder ein Datenbankprogramm angeboten werden.

Ein Beispiel für eine solche Online Office Suite ist derzeit die Applikation *Google Text & Tabellen,* die von dem Unternehmen Google Inc. mit Sitz in Mountain View, Kalifornien, USA, als Beta-Version angeboten wird. Ferner ermöglicht es die Beta-Version des Produkts *Adobe*® *Buzzword*® des Unternehmens Adobe Systems, Inc. mit Sitz in San Jose, Kalifornien, USA, ebenfalls mehreren Nutzern ein angebotenes Textverarbeitungsprogramm online zu nutzen

Derartige Online-Anwendungen haben den Vorteil, dass ein Nutzer nicht für jede Funktion, die er nutzen möchte, ein entsprechendes Programm auf seinem lokalen Computer installieren muss, da es sich um eine web-basierte Applikation handelt, auf die über jeden Web-Browser zugegriffen werden kann. Auch die erstellten und von mehreren Personen bearbeitbaren Daten müssen nicht lokal bei jedem Nutzer gespeichert werden, sondern werden zentral verwaltet. Ein Nutzer ist somit unabhängig von einem bestimmten Computer, auf dem eine Anwendung installiert und Daten gespeichert sind, sondern kann an jedem Ort, der über einen Intemetanschluss und einen Web-Browser verfügt, Dateien erstellen und bearbeiten.

Dieser Vorteil web-basierter Applikationen ist beispielsweise für die Erstellung von. Print-Erzeugnissen wie Hochzeitszeitungen einsetzbar, da hierbei die Wort- und Bildbeiträge mehrerer Personen gesammelt und zu einer Hochzeitszeitung zusammengefügt werden müssen. Dabei ist es oftmals nicht jeder Person zuzumuten, hierfür ein Programm auf ihrem Computer zu installieren. Beispielsweise offenbart die englische Zusammenfassung der koreanischen Patentanmeldung mit der Veröffentlichungsnummer KR 10 2005 000 5943 A, dass die Erstellung einer personalisierten Hochzeitszeitung über eine kostenpflichtige Website angeboten werden kann. Der Nutzer kann für die Erstellung der Zeitung ein Template auswählen und damit über die Website die gewünschte Zeitung erstellen.

Neben der typischen Anwendung für Hochzeitszeitungen ist es jedoch auch möglich, web-basierte Applikationen für die gemeinsame Erstellung jeglicher Print-Erzeugnisse wie beispielsweise Vereinszeitungen, Geburtstagsanzeigen, Werbebroschüren, etc. einzusetzen. Bei der Erstellung eines solchen Print-Erzeugnisses werden üblicherweise eigene Bilddateien der an der Erstellung des Print-Erzeugnisses beteiligten Personen verwendet und in das jeweils gewählte Layout integriert.

Werden Bilddateien in web-basierten Anwendungen von einem Nutzer hochgeladen, werden diese üblicherweise auf einem zentralen Applikationsserver gespeichert. Soll nun eine Darstellung der hochgeladenen Bilddatei für den Nutzer in seinem Web Browser erfolgen, damit der Nutzer die Darstellung betrachten kann, wird für diesen Zweck üblicherweise eine zweite Version der ursprünglichen Bilddatei erstellt, die eine geringere Auflösung und damit eine geringere Dateigröße aufweist. Diese Datei mit geringerer Auflösung kann dem Nutzer über seine Internetverbindung im Web Browser angezeigt werden, ohne dass die Darstellung für den Nutzer aufgrund begrenzter Datenübertragungskapazitäten des von ihm verwendeten Kommunikationskanals erheblich verlangsamt oder sogar unmöglich gemacht wird.

Wendet man diese Vorgehensweise auch bei Online-Applikationen für die Erstellung eines Print-Erzeugnisses an, werden einem Nutzer vorzugsweise nicht nur die von ihm hochgeladenen Bilder, sondern auch von der Anwendung zur Auswahl bereitgestellte Bilder mit einer geringeren Auflösung angezeigt, während die zugehörigen Original-Bilddateien mit höherer Auflösung zentral vorgehalten werden. Hierbei ist es jedoch ferner wünschenswert, dem Nutzer auch die üblichen Funktionen einer Bildbearbeitung anzubieten. Wenigstens kann dem Nutzer beispielsweise die Möglichkeit gegeben werden, die Position und Größe einer Bilddatei zu verändern und die Bilddatei zu bearbeiten. Ferner sollte der Nutzer Ausschnitte aus dem dargestellten Bild wählen und diese verkleinern oder vergrößern können. Darüber hinaus ist es vorteilhaft, wenn der Nutzer Parameter wie die Helligkeit und/oder den Kontrast verändern kann.

Wurde das Print-Erzeugnis vollständig durch einen oder mehrere Nutzer über die Online-Applikation erstellt, kann das resultierende Print-Erzeugnis nicht ohne Weiteres von den Nutzern lokal auf einem Drucker ausgedruckt werden, da die dazu erforderlichen Daten auf dem Applikationsserver hinterlegt sind. Diese müssten zuvor an das lokale Computersystem eines oder mehrerer Nutzer übermittelt werden. Als Service für die Nutzer oder um beispielsweise eine höhere Druckqualität zu gewährleisten, sollte es jedoch auch möglich sein, den Druckauftrag an einen Druck-Dienstleister zu übermitteln. Hierzu muss eine Druckdatei mit hoher Auflösung erzeugt werden. Der Druckauftrag kann dabei insbesondere Informationen darüber beinhalten, dass das Print-Erzeugnis mehrfach ausgedruckt und/oder über einen postalischen Zustelldienst an eine oder mehrere vorgegebene Personen versendet werden soll. Dieser Service kann dem/den Auftraggeber/n des jeweiligen Druckauftrags in Rechnung gestellt werden.

Ausgehend vom Stand der Technik stellt sich somit bei der Bereitstellung einer web-basierten Anwendung zur Erstellung eines Print-Erzeugnisses die Aufgabe, wenigstens einem Nutzer der Anwendung die einfache Bearbeitung einer Bilddatei zu ermöglichen, wobei die bearbeitete Bilddatei bei Erstellung des Print-Erzeugnisses in hoher Qualität ausdruckbar sein soll.

Erfindungsgemäß wird diese Aufgabe durch ein Verfahren zur Erzeugung einer Druckdatei mit den Merkmalen des unabhängigen Anspruches 1 gelöst. Vorteilhafte Weiterbildungen des Verfahrens ergeben sich aus den Unteransprüchen 2-11.

Das erfindungsgemäße Verfahren gemäß dem Oberbegriff des Anspruchs 1 ist durch folgende Verfahrensschritte gekennzeichnet:
a) Bereitstellen einer ersten Bilddatei, welche das Bildmotiv in einer ersten Original-Auflösung enthält, durch eine Applikation auf einem entfernt von dem ersten Computersystem angeordneten zweiten Computersystem, und Erzeugen wenigstens einer weiteren Bilddatei, welche das Bildmotiv in einer Auflösung enthält, die kleiner als die Auflösung der ersten Bilddatei ist, durch die Applikation auf dem zweiten Computersystem;
b) Speichern der ersten Bilddatei und der wenigstens einen weiteren Bilddatei in einem Speichermedium in Verbindung mit dem zweiten Computersystem, und Zuordnen der wenigstens einen weiteren Bilddatei zu Auswahlbefehlen und Speicherung dieser Zuordnung im Speichermedium;
c) Herstellen einer Internotverbindung zwischen dem ersten Computersystem und dem zweiten Computersystem über den Web Browser des ersten Computersystems;
d) Erfassen von Auswahlbefehlen des Nutzers durch die Eingabeeinrichtung des ersten Computersystems und Übermittelung der Auswahlbefehle an eine Bildbearbeitungseinheit des zweiten Computersystems über die hergestellte Internetverbindung;
e) Auswerten der empfangenen Auswahlbefehle durch die Bildbearbeitungseinheit, wobei die Bildbearbeitungseinheit bei der Auswertung anhand der im Speichermedium hinterlegten Zuordnungen ermittelt, welche der wenigstens einen weiteren Bilddatei den empfangenen Auswahlbefehlen zugeordnet ist und Festlegen dieser ermittelten Bilddatei als Arbeitsdatei;
f) Übermitteln der durch die Auswertung durch die Bildbearbeitungseinheit als Arbeitsdatei ermittelten Bilddatei über die Internetverbindung und den Web Browser an die Anzeige des ersten Computersystems; und anschließend
g) Erfassen von Bearbeitungsbefehlen des Nutzers durch die Eingabeeinrichtung des ersten Computersystems und Übermittelung der Bearbeitungsbefehle an die Bildbearbeitungseinheit des zweiten Computersystems über die hergestellte Internatverbindung;
h) Auswerten der empfangenen Bearbeitungsbefehle durch die Bildbearbeitungseinheit und Durchführen der Bearbeitungsbefehle durch die Bildbearbeitungseinheit auf der als Arbeitsdatei ermittelten Bilddatei, wobei eine bearbeitete Bilddatei als neue Arbeitsdatei erzeugt wird;
i) Übermitteln der durch die Bildbearbeitungseinheit bearbeiteten Bilddatei als neue Arbeitsdatei über die ilnternetverbindung und den Web Browser an die Anzeige;
j) Durchführen der Bearbeitungsbefehle durch die Bildbearbeitungseinheit auf der ersten Bilddatei mit Original-Auflösung und Erzeugung einer bearbeiteten Bilddatei mit Original-Auflösung;
k) Erstellen einer Druckdatei umfassend wenigstens das Bildmotiv der bearbeiteten ersten Bilddatei mit Original-Auflösung; und
l) Übermitteln dieser Druckdatei an eine Druckereinrichtung.

Die Erfindung sieht somit vor, dass für eine erste Bilddatei mit hoher Original-Auflösung wenigstens eine weitere Bilddatei mit geringerer Auflösung erzeugt und auf einem Applikationsserver hinterlegt wird, über den mehreren Nutzersystemen über eine Internetverbindung Bilddateien zur Ansicht und zur Bearbeitung übermittelt werden. Die Auswahlbefehle eines Nutzers an einer Eingabeeinrichtung werden vorzugsweise dahingehend ausgewertet, dass dem Nutzer als Vorschau stets diejenige Bilddatei als aktuelle Arbeitsdatei angezeigt wird, die für den Auswahlbefehl eine geeignete Auflösung aufweist. Die Bearbeitungsbefehle eines Nutzers werden für eine Vorschau auf der aktuellen Arbeitsdatei durchgeführt und anschließend auch auf der Bilddatei mit hoher Original-Auflösung durchgeführt, bevor aus dieser bearbeiteten Bilddatei eine Druckdatei mit ebenfalls hoher Auflösung erzeugt wird.

Wenigstens die Verfahrensschritte d) bis i) können sich wiederholen, bevor die Verfahrensschritte j) bis I) erfolgen, wobei wenigstens eine Wiederholung der Schritte stattfinden kann. In einem ersten Ausführungsbeispiel der Erfindung werden alle Bearbeitungsbefehle der Nutzer durch eine Protokolleinheit der Applikation protokolliert und auf der ersten Bilddatei mit hoher Original-Auflösung durchgeführt, sobald die mögliche Wiederholung wenigstens der Verfahrensschritte d) bis i) abgeschlossen ist. In einem zweiten Ausführungsbeispiel der Erfindung wird jeder Bearbeitungsbefehl der Nutzer durch die Bildbearbeitungseinheit parallel auf der als Arbeitsdatei ermittelten Bilddatei und auf der ersten Bilddatei in Original-Auflösung durchgeführt wird. Die Nutzer können somit beliebig viele Änderungen an Bilddateien durchführen und Bilddateien als Vorschau auf das zu erzeugende Druck-Erzeugnis in ihrem Web Browser betrachten. Dabei wird stets mit Bilddateien geringerer Auflösung gearbeitet, auf welche die Bearbeitungsbefehle angewendet werden. Die Bearbeitungsbefehle werden dann vor Erstellung einer Druckdatei auch auf die Original- Bilddatei mit hoher Auflösung angewendet. Die Bearbeitung der Original-Datei kann dabei parallel zur Bearbeitung der Arbeitsdateien geringerer Auflösung erfolgen, oder alle Bearbeitungsbefehle an den Arbeitsdateien werden protokolliert und erst auf die Bilddatei mit höherer Original-Auflösung angewendet, wenn zum Abschluss der diversen Bearbeitungsvorgänge eine Druckdatei erzeugt werden soll.

Vorzugsweise werden wenigstens zwei weitere Bilddateien mit unterschiedlichen Auflösungen, die jeweils kleiner sind als die Auflösung der ersten Bilddatei, durch die Applikation auf dem zweiten Computersystem erzeugt und im Speichermedium hinterlegt, um für verschiedene Ansichten und insbesondere für verschiedene Vergrößerungsstufen jeweils eine geeignete Bilddatei bereitstellen zu können. Hierbei kann erneut vorgesehen sein, dass Bearbeitungsbefehle, die durch die Bildbearbeitungseinheit auf einer ersten Bilddatei der wenigstens zwei weiteren Bilddateien durchgeführt werden, parallel auf allen weiteren Bilddateien der zwei weiteren Bilddateien durchgeführt werden, und dass sich nach der Durchführung dieser Bearbeitungsbefehle durch die Bildbearbeitungseinheit die Verfahrensschritte d) bis f) wiederholen, wobei die Auswertung der Auswahlbefehle ergibt, dass den empfangenen Auswahlbefehlen des Nutzers eine zweite Bilddatei der wenigstens zwei weiteren Bilddateien zugeordnet ist und diese bearbeitete zweite Bilddatei als neue Arbeitsdatei über die lnternetverbindung und den Web Browser an die Anzeige des ersten Computersystems übermittelt wird.

Alternativ kann vorgesehen sein, dass Bearbeitungsbefehle, die durch die Bildbearbeitungseinheit auf einer ersten Bilddatei der wenigstens zwei weiteren Bilddateien durchgeführt werden, durch eine Protokolleinheit der Applikation protokolliert werden, und dass sich nach der Durchführung der Bearbeitungsbefehle durch die Bildbeärbeitungseinheit die Verfahrensschritte d) bis f) wiederholen, wobei die Auswertung der Auswahlbefehle des Nutzers ergibt, dass den empfangenen Auswahlbefehlen eine zweite Bilddatei der wenigstens zwei weiteren Bilddateien zugeordnet ist, und dass die protokollierten Bearbeitungsbefehle von der Bildbearbeifiungseinheit auf der zweiten Bilddatei durchgeführt werden und die bearbeitete zweite Bilddatei als neue Arbeitsdatei über die Internetverbindung und den Web Browser an die Anzeige des ersten Computersystems übermittelt wird.

In einem Ausführungsbeispiel der Erfindung wird die Druckdatei von einem Konverter der Applikation erzeugt, wobei die Druckdatei im pdf-Format erzeugt wird. Die Druckdatei kann ferner zusätzlich zu dem wenigstens einen Bildmotiv der ersten Bilddatei auch Textangaben umfassen. Ferner sieht die Erfindung vorzugsweise vor, dass das erfindungsgemäße Verfahren über die Web-Browser mehrerer Computersysteme durchgeführt wird, wobei die erste Bilddatei durch alle an den ersten Computersystemen durch die jeweilige Eingabeeinrichtung erfassten Bearbeitungsbefehle bearbeitet wird.

Zusätzlich zu einem Bildmotiv der bearbeiteten ersten Bilddatei mit Original-Auflösung kann die Druckdatei wenigstens das Bildmotiv einer weiteren bearbeiteten Bilddatei mit Original-Auflösung umfassen, so dass in die Druckdatei mehrere Bildmotive mehrerer Bilddateien einfließen können. Die jeweiligen Bildmotive können bearbeitet oder unbearbeitet in die Druckdatei aufgenommen werden.

Der Vorteil des erfindungsgemäßen Verfahrens liegt im Wesentlichen darin, dass es den Betrieb einer web-basierten Anwendung ermöglicht, über die mehrere Nutzer Bilddateien für den anschließenden Druck eines Druck-Erzeugnisses online als Vorschau betrachten und bearbeiten können. Damit hierzu keine Original-Bilddateien in relativ hoher Auflösung an die Web Browser aller Nutzer übermittelt werden müssen, werden für verschiedene Ansichten Bilddateien mit geringerer Auflösung erzeugt und für die Ansicht im Web Browser verwendet. Dabei können für unterschiedliche Vergrößerungsstufen Bilddateien mit angepassten Auflösungen verwendet werden, so dass sich die Bildqualität insbesondere bei vergrößerten Bildausschnitten nicht erheblich verschlechtert. Der Nutzer kann auch während des Bearbeitungsprozesses zwischen verschiedenen Vergrößerungsstufen wählen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel einer Anordnung von Komponenten zur Durchführung des erfindungsgemäßen Verfahrens:
- Fig. 2: Verfahrensschritte bei einem Ausführungsbeispiel des erfindungsgemäßen Verfahrens; und
- Fig. 3: eine schematische Darstellung eines mit dem erfindungsgemäßen Verfahren erzeugten Druck-Erzeugnisses.

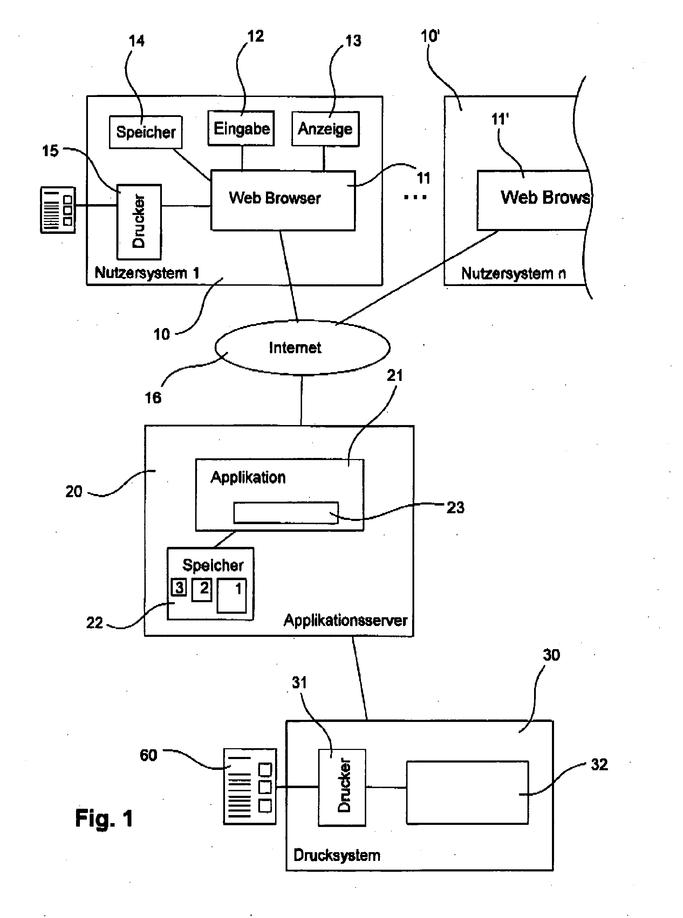

Das erfindungsgemäße Verfahren wird vorzugsweise durch eine Anordnung von Komponenten durchgeführt, wie sie beispielhaft in Fig. 1 dargestellt ist. Hierbei ist wenigstens ein erstes Computersystem 10 vorgesehen, dass sich im Bereich eines ersten Nutzers befindet. Bei dem Computersystem 10 kann es sich um einen lokalen Computer/PC oder beispielsweise auch um ein tragbares Gerät wie ein Laptop oder ein Mobiltelefon mit Internetfunktion handeln, Dieses erste Computersystem 10 im Bereich eines Nutzers wird Im Folgenden auch als Nutzersystem bezeichnet.

Das Nutzersystem 10 weist einen Web Browser 11 oder eine ähnliche Anwendung auf, welche die Verbindung des Nutzersystems über eine Internetverbindung 16 zu einem zweiten Computersystem 20 ermöglicht, das einen Applikationsserver umfasst, auf dem die vom Nutzer gewünschten Funktionen online angeboten werden. Vorzugsweise können mehrere Nutzersysteme bis zu einer beliebigen Anzahl n über das Internet Zugriff auf den Applikationsserver 20 nehmen, wobei jedes weitere Nutzersystem 10' ebenfalls über einen Web Browser 11' verfügt.

Die Konfiguration der Nutzersysteme kann variieren. Zweckmäßigerweise umfassen sie jedoch wenigstens einen Speicher 14, eine Eingabeeinrichtung 12 und eine Anzeige 13. Bei der Anzeige 13 handelt es sich beispielsweise um einen separaten Monitor, der an einen Computer angeschlossen ist oder um ein integriertes Display, wie es beispielsweise bei Laptops der Fall ist. Bei der Eingabeeinrichtung 12 kann es sich um eine Tastatur in Verbindung mit einem Zeigegerät wie einer EDV-Maus handeln, über welche Bewegungen des Mauszeigers durch einen Nutzer auf die Anzeige 13 und das Betriebssystem des Computersystems 10 übertragen werden können. Anzeige 13 und Eingabeeinrichtung 12 können auch durch einen Touch-Screen miteinander kombiniert werden. Sowohl die Anschläge einer Tastatur, Bewegungsinformationen eines Mauszeigers oder Berührungsinformationen eines Touchscreens können über den Web Browser 10 an den Applikationsserver 20 übermittelt werden, welcher die mit den Informationen verbundenen Befehle ausführt. Ein Nutzersystem 10 kann ferner an einen Drucker 15 angeschlossen sein.

Das Frontend beim Nutzer kann beispielsweise über eine bei web-basierten Anwendungen übliche Flash-Technologie realisiert werden. Durch die Kombination von Animation und Programmierung ist Flash besonders geeignet, um komplexe Websites und browser-basierte Anwendungen zu programmieren. Das Frontend kann beispielsweise in ActionScript 3 realisiert werden, wobei auf dem Computersystem des Nutzers ein entsprechender Flash-Plugin installiert sein muss.

Auf dem Applikationsserver des zweiten Computersystems 20 wird eine Anwendung 21 betrieben, welche verschiedene Funktionen bereitstellt. Für dieses Backend-Framework kann beispielsweise PRADO (PHP Rapid Application Development Object-oriented) eingesetzt werden. PRADO ist ein komponenten- und ereignisbasiertes Framework für die Entwicklung von Web-Applikationen. Im Mittelpunkt steht dabei die ereignis-orientierte Programmierung, welche die Benutzerinteraktion in den Vordergrund stellt. Für die Frontendentwicklung stellt PRADO eine Vielzahl von Komponenten zur Verfügung, so dass sich Benutzeroberflächen bausteinartig zusammenstellen lassen. Die Kommunikation zwischen Frontend und Backend kann mittels Flash-Remoting durchgeführt werden. Als Web-Server kann Apache2 zum Einsatz kommen. Jede Kommunikation mit den Webservern wird mittels HTTPS verschlüsselt.

Insbesondere umfasst die Anwendung 21 auf dem Server 20 eine Softwarekomponente, die als Bildbearbeitungseinheit 23 zu bezeichnen ist. Diese Bildbearbeitungseinheit 23 stellt dem Nutzer übliche Funktionen für die Bearbeitung von Bildern bereit, die typischerweise über eine Toolbox angeboten werden. Dabei kann der Nutzer beispielsweise Filter hinzufügen und dadurch die Helligkeit, den Kontrast und die Farbsättigung verändern. Ferner kann für Fotos eine Funktion zur Entfernung des "Rote-Augen"-Effektes bereitgestellt werden. Zweckmäßig ist ferner eine Funktion zum Drehen und Spiegeln von Bildern und zur Auswahl eines Bildausschnittes. In Verbindung damit können Funktionen für eine vergrößerte oder verkleinerte Ansicht eines Bildes bereitgestellt werden (Zoom-Funktionen).

Es ist vorzugsweise vorgesehen, dass bei Nutzung der Funktionen der Bildbearbeitungseinheit 23 die jeweiligen Ergebnisse direkt in dem zugewiesenen Bild als Vorschau abgebildet werden. Eine finale Anwendung der ausgewählten Funktionen kann gegebenenfalls erst dann durchgeführt werden, wenn ein Nutzer aktiv die Bearbeitung z.B. mittels Aktivierung eines entsprechenden Interaktionselements bestätigt.

Die Bildbearbeitungseinheit 23 steht in Verbindung mit einem Speichermedium 22, in welchem die zu bearbeitenden Bilder in Form von Bilddateien hinterlegt sind. Da die Bilddateien vorzugsweise von mehreren Nutzern bearbeitbar sein sollen, werden sie somit zentral auf dem Applikationsserver 20 hinterlegt und mehreren Nutzern zur Verfügung gestellt. Bei den Bilddateien kann es sich zum einen um Bildmotive handeln, die den Nutzern von der Applikation 21 zur Auswahl bereitgestellt werden. Ergänzend oder alternativ kann es sich auch um Bildmotive handeln, die zuvor von einem oder mehreren Nutzern bereitgestellt und über die Internetverbindung 16 auf den Applikationsserver 20 geladen wurden.

In einem Ausführungsbeispiel der Erfindung steht der Applikationsserver 20 in Verbindung mit der Druck-Applikation 32 eines Drucksystems 30, das wenigstens einen Drucker 31 zur Erzeugung von Druck-Erzeugnissen 60 umfasst. Bei dem Drucker 31 handelt es sich vorzugsweise um einen Digitaldrucker. Das Drucksystem 31 kann sich entfernt von dem Applikationsserver 20 befinden und beispielsweise ebenfalls über eine Internetverbindung mit dem Applikationsserver verbunden sein. Das Drucksystem 30 kann jedoch auch auf dem Applikationsserver 20 realisiert werden, so dass ein oder mehrere Drucker direkt an den Applikationsserver 20 angeschlossen sind. Die Darstellung der Fig. 1 ist somit nicht einschränkend zu verstehen, sondern stellt lediglich schematisch ein mögliches Ausführungsbeispiel der Erfindung dar.

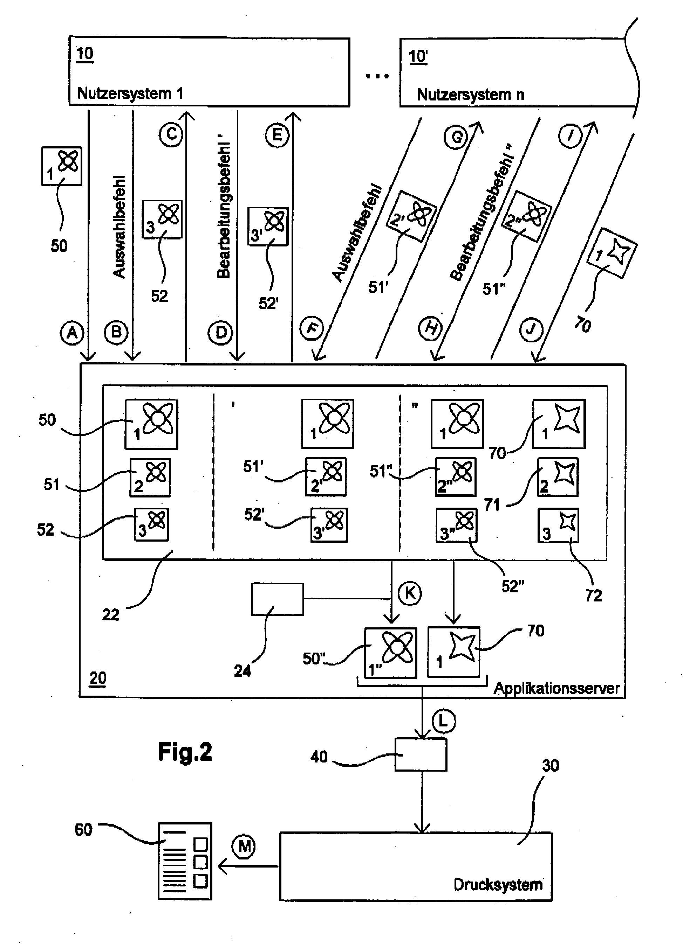

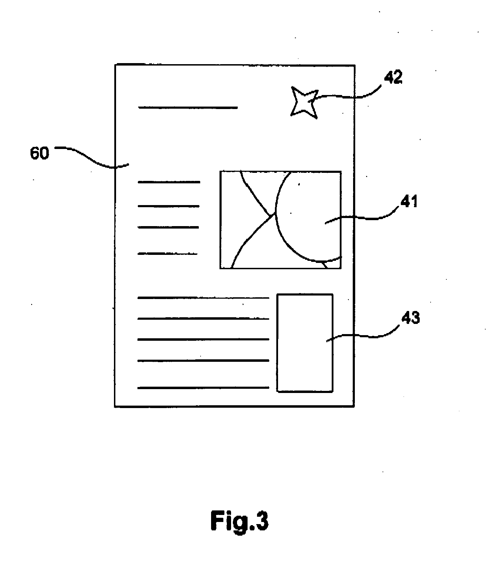

Die einzelnen Schritte des erfindungsgemäßen Verfahrens werden im Folgenden beispielhaft anhand der schematischen Darstellung in Fig. 2 erläutert. Fig. 2 zeigt erneut mehrere Nutzersysteme 10, 10', die vorzugsweise über eine Internetverbindung mit dem Applikationsserver 20 verbindbar sind. Die Nutzer der Nutzersysteme erstellen jeweils für sich oder vorzugsweise gemeinsam ein Druck-Erzeugnis 60, das ein oder mehrere Bildmotive umfasst. Ein solches Druckerzeugnis 60 mit mehreren integrierten Bildmotiven ist schematisch auch in Fig. 3 dargestellt. Das Druck-Erzeugnis 60 kann neben mehreren Bildmotiven 41, 42 und 43 auch Textangaben enthalten, und die Bildmotive können auf einer Druckseite von den Nutzern beliebig angeordnet und beliebig gestaltet werden. Werden für die Erstellung des Druck-Erzeugnisses Templates verwendet, können verschiedene Parameter wie die Positionierung und Größe von Bildmotiven vorgegeben sein.

Für die Bildbearbeitung steht den Nutzern die Bildbearbeitungseinheit 23 des Applikationsservers 20 zur Verfügung, während die Textbearbeitung durch ein ebenfalls von der Applikation 21 bereitgestelltes Textverarbeitungsprogramm erfolgen kann. Die Applikation 21 verarbeitet die Bearbeitungsbefehle beider Anwendungen und kombiniert sie in einer Druckdatei 40 zu der endgültigen Ansicht einer Druckseite. Dabei kann ein erstes Bildmotiv 41 von einem ersten Nutzer ausgewählt und bearbeitet worden sein, während zwei weitere Bildmotive 42 und 43 beispielsweise von weiteren Nutzern ausgewählt und bearbeitet wurden.

Möchte ein erster Nutzer über sein Nutzersystem 10 eine Bilddatei mit Hilfe der Applikation 21 in ein Druckerzeugnis 60 integrieren und hierbei gegebenenfalls bearbeiten, kann er beispielsweise auf vorgegebene Bilddateien zurückgreifen, die bereits in dem Speicher 22 des Applikationsservers 20 hinterlegt sind. Alternativ kann er eine Bilddatei 50 seiner Wahl von seinem Computersystem 10 auf den Applikationsserver 20 hochladen, wie es als Schritt A in Fig. 2 dargestellt ist. Diese Bilddatei 50 hat vorzugsweise eine relativ hohe Auflösung, um die Qualität des zu erzeugenden Druck-Erzeugnisses 60 auf einem Digitaldrucker zu gewährleisten.

Zweckmäßigerweise können bei einem Bild-Upload alle Bildformate hochgeladen werden, welche mittels eines Flash-Players im Web Browser der Nutzer weiterverarbeitet werden können. Beispielsweise können Bilddateien in den Formaten jpg, gif, png, tiff und bmp geladen werden. Vorzugsweise wird das Druckerzeugnis 60 über ein gewähltes Mastertemplate erstellt, das Vorgaben definiert, die global für alle Seiten des Druck-Erzeugnisses gültig sind. Bei diesen Vorgaben kann es sich beispielsweise um globale Hintergrundfarben, definierte Schriftarten und eine Anzahl von Subtemplates handeln, welche das Layout des Druck-Erzeugnisses je Seite bestimmen. Ein Subtemplate definiert die seitenspezifischen Platzhalter, in welche Inhalte wie Bilder und Text von den verschiedenen Nutzern eingefügt werden können. Das Subtemplate legt somit fest, welcher Inhaltstyp an welcher Stelle der Seite positioniert werden kann. Die eigentliche Generierung der Inhalte findet über die Aktivierung der im Subtemplate hinterlegten Platzhalter (Bild oder Text) statt. Hierbei findet die Editierung der Inhalte vorzugsweise in einem WYSIWYG-Modus statt (What-you-see-is-what-you-get-Modus) direkt in einem von einem Nutzer aktivierten Platzhalter (Inline-Erstellung). Es können jedoch auch Templates gewählt werden, die eine weitestgehend freie Gestaltung des Druck-Erzeugnisses durch die Nutzer ermöglichen.

In einem Bildeditor besteht für die Nutzer die Möglichkeit, die jeweiligen Bildinhalte in einen dafür vorgesehenen Platzhalter zu laden. Bei der Zuweisung eines Bildes in den Bildplatzhalter kann auf der Basis der Abmessungen des entsprechenden Bildes die spätere Druckqualität überprüft werden. Sollte die Auflösung des Bildinhaltes zu gering sein, kann vorgesehen sein, dass der Nutzer eine Bestätigung abgeben muss, dass eventuell Qualitätseinbußen bei einem späteren Digitaidruck zu erwarten sind.
Die Auflösung der vom ersten Nutzer hochgeladenen Bilddatei 50 sollte somit ausreichend sein, um bei der gewählten Bildgröße einen Digitaldruck des Bildes in gewünschter Qualität zu gewährleisten. Da es die Bildbearbeitungseinheit 23 ermöglicht, Ausschnitte aus einem Bild zu wählen, sollte die Auflösung der Original-Bilddatei so gewählt werden, dass auch kleinere Ausschnitte bei einer bestimmten Größe eines Bildplatzhalters noch eine ausreichende Auflösung aufweisen.

Die von einem Nutzer hochgeladene Bilddatei 50 wird somit typischerweise eine hohe Auflösung beispielsweise in der Größenordnung von 100-300dpi und damit eine hohe Dateigröße aufweisen. Typische Dateigrößen solcher Bilder hoher Auflösung liegen in der Größenordnung von 5-20 Megabyte. Diese Bilddatei 50 wird im Speichermedium 22 des Applikationsservers hinterlegt, damit sie von dort aus mehreren Nutzern zur Ansicht und zur Bearbeitung bereitgestellt werden kann. Diese Datel wird in Fig. 2 auch mit der Ziffer 1 gekennzeichnet. Müsste nun diese Datei in den Web Browsern eines jeden Nutzers übertragen werden, welcher die Bilddatei zu betrachten oder sogar zu bearbeiten wünscht, könnte dies nur sehr langsam erfolgen oder wäre aufgrund der beim Nutzer begrenzten Datenübertragungsgeschwindigkeiten sogar nicht möglich. Daher wird von der Applikation 21 zu der Bilddatei 50 wenigstens eine weitere Bilddatei 51 mit einer Auflösung erstellt, die geringer ist als die Auflösung der Original-Datei 50. Dadurch verringert sich gegenüber der Original-Datei 50 auch die Dateigröße dieser zweiten Bilddatei 51. Damit diese weitere Datei 51 von den Nutzern über einen Web Browser als Vorschau auf das endgültige Druck-Erzeugnis betrachtet werden kann, hat sie beispielsweise eine Dateigröße in der Größenordnung von 200-300 Kilobyte, vorzugsweise von 250 Kilobyte. Diese zweite Datei geringerer Dateigröße wird in Fig. 2 auch mit der Ziffer 2 gekennzeichnet.

Insbesondere damit den Nutzern bei der Bildbearbeitung auch Vergrößerungsfunktionen zur Verfügung stehen, würde eine Datei 51 geringerer Dateigröße jedoch gegebenenfalls für eine solche Funktion nicht ausreichen. Würde dem Nutzer beispielsweise innerhalb einer Zoom-Funktion ein Ausschnitt aus dieser zweiten Datei 51 angezeigt, würde sich die Auflösung des gewählten Ausschnittes reduzieren, was für den Nutzer auf der Anzeige 13 seines Computersystems 10 zu einer schlechteren Bildqualität führt. Um dem Nutzer auch für eine solche vergrößerte Bildansicht eine gute Bildqualität bieten zu können, wird von der Applikation 21 vorzugsweise wenigstens eine weitere Biiddatei 52 erstellt und ebenfalls im Speichermedium 22 hinterlegt. Diese Bilddatei 52 wird in Fig. 2 auch mit der Ziffer 3 gekennzeichnet und weist eine Auflösung auf, die zwischen den Auflösungen der Original-Bilddatei 50 und der zweiten Bilddatei 51 liegt. Die Auflösung ist jedoch immer noch so gering, dass die resultierende Dateigröße eine problemlose Ansicht und Bearbeitung des Bildes in dem Web Browser eines Nutzers ermöglicht. Sie liegt somit vorzugsweise unterhalb von 250 Kilobyte. Sind für mehrere Stufen der Vergrößerung und Verkleinerung innerhalb einer Zoom-Funktion der Bildbearbeitungseinheit 23 weitere Bilddateien mit speziell angepassten Auflösungen erforderlich, können hierfür von der Applikation 21 neben den Bilddateien 50, 51 und 52 weitere Bilddateien erstellt und im Speicher 22 hinterlegt werden.

Jeder der weiteren Bilddateien 51 und 52 wird von der Applikation 21 ein Auswahlbefehl zugeordnet, und diese Zuordnung wird in der Applikation 21 hinterlegt. Beispielsweise wird die Bilddatei 51 einem normalen Auswahlbefehl zugeordnet, wenn der Nutzer beispielsweise die Vorschau einer Seite des Druck-Erzeugnisses wählt, auf der sich das betreffende Bild befindet. Dagegen kann die Bilddatei 52 einem Auswahlbefehl zugeordnet werden, die eine Vergrößerungsfunktion beinhaltet.

Diese Auswahlbefehle müssen von einem Nutzer nicht explizit an der Eingabeeinrichtung 12 eingegeben werden, sondern sie ergeben sich zweckmäßigerweise implizit aus den Aktionen des Nutzers auf der Oberfläche des Web Browsers. Ferner muss es sich nicht um eine direkte Zuordnung handeln, sondern die Zuordnung kann sich auch durch eine in der Applikation 21 beinhaltete Programmierung ergeben.

Wählt nun der erste Nutzer über die Eingabeeinrichtung 12 seines Computersystems 10 eine Ansicht des Bildes 50 innerhalb des Layouts des zu erstellenden Druck-Erzeugnisses aus, wird dieser Auswahlbefehl über den Web Browser 11 an die Applikation 21 übermittelt und von dieser ausgewertet. Der Auswahlbefehl kann beispielsweise beinhalten, dass das Bild als Vorschau in normaler Ansicht angezeigt werden soll. Es kann sich jedoch auch um einen Vergrößerungsbefehl handeln, der eine vergrößerte Ansicht des Bildes auswählt. Dieser Fall ist als Schritt B in Fig. 2 dargestellt. Die Applikation 21 wählt zur Ausführung dieses Auswahlbefehls somit die Bilddatei 52 aus (Ziffer 3), welche für Vergrößerungsfunktionen eine mittlere Auflösung aufweist. Diese Datei wird dem Nutzer in Schritt C auf der Anzeige 13 seines Computersystems 10 als aktuelle Arbeitsdatei angezeigt. Wählt der Nutzer anschließend eine andere Ansicht des Bildes aus, würde dieser neue Auswahlbefehl erneut von der Applikation 21 ausgewertet und dem Nutzer gegebenenfalls eine andere Bilddatei als Arbeitsdatei zur Ansicht angezeigt, falls diese eine für diese Auswahl günstigere Auflösung aufweisen würde.

Nimmt der Nutzer nun eine Bearbeitung der Datei 52 vor, wird der Applikation 21 von dem Nutzersystem 10 ein entsprechender erster Bearbeitungsbefehl übermittelt, was in Fig. 2 als Schritt D und mit einem hochgestellten' dargestellt ist. Die Bildbearbeitungseinheit 23 der Applikation 21 führt diesen Bearbeitungsbefehl auf der Bilddatei 52 durch und erzeugt so eine neue Bilddatei 52', welche in Schritt E als neue bearbeitete Arbeitsdatei auf der Anzeige 13 im Nutzersystem 10 angezeigt wird. Dabei kann die neue Bilddatei 52' die vorherige Bilddatei 52 im Speicher 22 ersetzen, oder es wird eine weitere Bilddatei erstellt, so dass im Speicher für diese bestimmte Auflösung eine unbearbeitete und eine bearbeitete Bilddatei vorliegen. Diese Vorgehensweise hat den Vorteil, dass so alle von den Nutzern erstellten Inhalte versioniert abgelegt werden. Die jeweiligen Versionsstände können auf Interaktion des Nutzers oder automatisch gespeichert werden. Der Nutzer hat so die Möglichkeit, alte Versionsstände von Bildmotiven wiederherzustellen. Die jeweils alten Versionsstände und damit die zugehörigen Bilddateien im Speicher 22 können einem Nutzer als Vorschau im Editor angezeigt werden.

Ferner ist es möglich, dass eine finale Anwendung der ausgewählten Bildbearbeitungsfunktionen erst dann durchgeführt wird, wenn ein Nutzer aktiv die Bearbeitung z.B, mittels Aktivierung eines entsprechenden Interaktionselaments bestätigt. Vorherige Bearbeitungen werden dem Nutzer somit in der jeweils angezeigten Bilddatei nur als Vorschau präsentiert, während alle anderen Bilddateien erst bei Bestätigung der Bearbeitung durch den Nutzer angepasst oder die Bearbeitungsbefehle protokolliert werden.

Der Bearbeitungsbefehl ' des Nutzers kann parallel auf der Original-Bilddatei 50 und/oder der weiteren Bilddatei 51 durchgeführt werden. Bei Aufruf einer Datei mit anderer Auflösung und/oder bei Erstellung der Druckdatei 40 wurden in diesem Fall bereits alle Bearbeitungsbefehle nicht nur auf der zurzeit dem Nutzer angezeigten Arbeitsdatei, sondern auch auf allen anderen gespeicherten Bilddateien durchgeführt. Alternativ kann der Bearbeitungsbefehl in einer Protokolleinheit 24 protokolliert und erst zu einem späteren Zeitpunkt auf anderen Dateien ausgeführt werden. Insbesondere kann es zweckmäßig sein, die Bearbeitung der Original-Bilddatei 50 anhand der protokollierten Bearbeitungsbefehle erst zu einem späteren Zeitpunkt durchzuführen und nicht zeitnah zur Bearbeitung von Vorschau-Bilddateien im Web Browser eines Nutzers.

Die beschriebenen Schritte können sich nun beliebig oft wiederholen, wobei ein Nutzer beispielsweise weitere Bearbeitungsbefehle für die Bilddatei 52' erzeugen kann. Er kann jedoch auch für weitere Bearbeitungsbefehle eine andere Ansicht wählen. Durch einen Auswahlbefehl könnte er beispielsweise anstatt der bisherigen vergrößerten Ansicht nun eine normale Ansicht des Bildes wählen. In diesem Fall würde die Applikation 21 dem Nutzer beispielsweise die 8ilddatei 51 mit geeigneter Auflösung anzeigen. Damit diese Bilddatei 51 die bereits vom Nutzer durchgeführten Bearbeitungen enthält, könnte dem Nutzer sofort eine parallel erzeugte Bilddatei 51' als Arbeitsdatei angezeigt werden. Alternativ können die in der Protokolleinheit 24 protokollierten Bearbeitungsbefehle erst jetzt zeitnah auf die Bilddatei 51 angewendet und dem Nutzer als Ergebnis ebenfalls die bearbeitete Bilddatei 51' als neue Arbeitsdatei angezeigt werden.

Anhand der Fig. 2 soll nun ein weiterer Schritt F erläutert werden, bei dem sich ein zweiter Nutzer über sein Nutzersystem 10' an der Bearbeitung der Bilddateien des ersten Nutzers beteiligt. Beide Nutzer können nacheinander an der Bearbeitung einer Seite des Druck-Erzeugnisses und damit auch der Bearbeitung eines oder mehrerer Bilder mitwirken. Um den derzeitigen Status bei der Erstellung des Druck-Erzeugnisses zu betrachten, wählt der zweite Nutzer beispielsweise eine Seite des Druckerzeugnisses an, auf dem sich das Bildmotiv der Bilddatei 50 befindet. Das Bild wurde bereits vom ersten Nutzer bearbeitet und stellt sich dem zweiten Nutzer ebenso dar. Der entsprechende Auswahlbefehl des zweiten Nutzers wird in Schritt F der Applikation 21 übermittelt. Diese bestimmt emeut, welche Art der Ansicht der zweite Nutzer gewählt hat. In dem in Fig. 2 dargestellten Ausführungsbeispiel handelt es sich um eine normale Ansicht, zu der dem Web Browser des zweiten Nutzers aufgrund ihrer Auflösung die Bilddatei 51 (Ziffer 2) geliefert werden muss. Wie zuvor erläutert, wurden die bereits vom ersten Nutzer an der Bilddatei 52 durchgeführten Bearbeitungsschritte entweder parallel auch an der Bilddatei 51 durchgeführt, oder die entsprechenden Bearbeitungsbefehle wurden in der Protokolleinheit 24 protokolliert. Im ersten Fall kann die parallel bearbeitete Bilddatei 51' dem zweiten Nutzer sofort über seinen Web Browser angezeigt werden, während im zweiten Fall vorher die protokollierten Bearbeitungsschritte aus der Protokolleinheit 24 aufgerufen und auf der Bilddatei 51 durchgeführt werden müssen. In beiden Fällen wird dem zweiten Nutzer in Schritt G eine bearbeitete Bilddatei 51' als Arbeitsdatei angezeigt.

Der zweite Nutzer kann die Bilddatei 51' nun seinerseits bearbeiten und ein entsprechender Bearbeitungsbefehl "wird in Schritt H an die Applikation 21 übermittelt. Die Bildbearbeitungseinheit 23 führt die Bearbeitung an der Bilddatei 51' durch und erzeugt so eine neue Bilddatei 51", die dem zweiten Nutzersystem 10' in Schritt I als neue Arbeitsdatei zur Ansicht übermittelt wird. Wie zuvor erläutert, kann auch dieser Bearbeitungsschritt parallel auf allen zugehörigen Bilddateien durchgeführt werden oder die Befehle werden in der Protokolleinheit 24 protokolliert und erst bei Bedarf durchgeführt.

Selbstverständlich kann nun auch wieder der erste Nutzer eine Bearbeitung vornehmen oder weitere Nutzer nehmen an der gemeinsamen Bearbeitung teil. Da das zu erstellende Druck-Erzeugnis 60 mehrere Bildmotive enthalten kann, können alle Nutzer weitere Bilddateien auswählen oder selbst hochladen, die ebenfalls auf die beschriebene Art und Weise betrachtet und bearbeitet werden können. Es kann jedoch auch vorgesehen sein, dass einzelne Bilder von vorneherein von einem Nutzer gesperrt werden, so dass für andere Nutzer der Applikation nur eine Ansicht, aber keine Bearbeitung des Bildmotivs möglich ist. Ferner kann der Status eines Bildmotivs nach der Bearbeitung geändert werden, so dass ein Bildmotiv, das beispielsweise den Status "Bearbeitung abgeschlossen" trägt, nicht mehr weiter bearbeitet werden kann.

Der zweite Nutzer kann somit in Schritt J eine weitere Bilddatei 70 mit einem zweiten Bildmotiv auf den Applikationsserver 20 hochladen, zu der von der Applikation 21 wiederum zwei weitere Bilddateien 71 und 72 mit geringeren Auflösungen erzeugt und zusammen mit der Bilddatei 70 in Original-Auflösung im Speicher 22 hinterlegt werden. Diese Dateien können nun wieder allen Nutzern, wie zuvor beschrieben, zur Ansicht und Bearbeitung bereitgestellt werden. Erfolgt für die Bilddatei 70 des zweiten Nutzers keine Bildbearbeitung, verbleiben im Speicher 22 lediglich unbearbeitete Versionen, wie es in Fig. 2 dargestellt ist.

Nach Fertigstellung des Layouts des Druck-Erzeugnisses muss aus den gesamten Informationen eine Druckdatei 40 erzeugt werden, die in möglichst hoher Qualität vom Drucksystem 30 ausgedruckt werden kann. Falls alle Bearbeitungsbefehle der Nutzer nicht parallel auf der Original-Bilddatei 50 mit der höchsten Auflösung durchgeführt wurden, wie es in dem Ausführungsbeispiel der Fig. 2 der Fall ist, werden die protokollierten Bearbeitungsbefehle nun aus der Protokolleinheit 24 aufgerufen und in Schritt K auf der Origirial-Bilddatei 50 durchgeführt, so dass eine bearbeitete Bilddatei 50" mit hoher Auflösung erzeugt wird. Da die Bilddatei 70 des zweiten Nutzers in dem in Fig. 2 dargestellten Ausführungsbeispiel nicht bearbeitet wurde, kann die Original-Datei 70 verwendet werden. Aus der Bilddatei 50", der Bilddatei 70 wird gegebenenfalls zusammen mit weiteren Bilddateien und Textinformationen in Schritt L eine Druckdatei 40 erzeugt. Bei dieser Druckdatei 40 handelt es sich vorzugsweise um eine Datei im pdf-Format, die beispielsweise von der Applikation 21 erzeugt werden kann. Zur Konvertierung der Editordaten ist vorzugsweise ein Konverter programmiert, welcher die eingegebenen Text- und Bilddaten serverseitig in ein druckbares pdf-Dokument wandelt. Der Konverter kann beispielsweise in PHP5 realisiert werden. Zur Erstellung der pdf-Datei kann das PHP-Modul PDFLib verwendet werden.

Der Konverter kann Teil des Applikationsservers 20 sein. Es kann sich jedoch auch um eine eigenständige Komponente handeln, welche die erforderlichen Daten von dem Applikationsserver 20 erhält und der Applikation ein druckbares pdf-Dokument liefert.

In einem Ausführungsbeispiel der Erfindung werden Pixeldaten mit 300dpi-Auflösung in die pdf-Datei eingebettet. Die Druckdatei 40 wird an das Drucksystem 30 übermittelt oder dem Drucksystem auf dem Applikationsserver zum Download bereitgestellt. Ein Drucker des Drucksystems 30 druckt das Druck-Erzeugnis 60 aus, wobei zuvor beispielsweise anhand einer Liste eine Sichtprüfung nach unzulässigen Inhalten durchgeführt werden kann.

Ergänzend kann von der Applikation 21 ein pdf-Dokument in geringerer Auflösung von etwa 72dpi erstellt und einem oder mehreren Nutzern der Online-Applikation 21 bereitgestellt werden. Der Nutzer kann diese Datei über seinem Web Browser 11 auf seinem lokalen Drucker 15 ausdrucken oder von dem Applikationsserver 20 auf sein lokales Computersystem 10 herunteriaden.

Aus der in Fig. 3 dargestellten schematischen Ansicht eines Druck-Erzeugnisses ist ersichtlich, dass das Bildmotiv 42 der Bilddatei 70 des zweiten Nutzers ohne Bearbeitung in die Druck-Datei 40 eingegangen ist, wobei das Bildmotiv lediglich innerhalb der Druckseite platziert wurde. Von dem Bildmotiv 41 der Bilddatei 50 des ersten Nutzers wurde dagegen ein vergrößerter Ausschnitt des Original-Bildmotivs gewählt, so dass die bearbeitete Version 50" in die pdf-Datei eingegangen ist. Ein weiteres Motiv 43 könnte wiederum von einem anderen Nutzer eingebettet und bearbeitet worden sein.

Die Druckleistung des Drucksystems 30 und/oder die Bereitstellung der Applikation 21 mit ihren Funktionen kann einem oder mehreren Nutzern in Rechnung gestellt werden, was über übliche Verfahren erfolgen kann.

### Bezugszeichenliste:

- 10,10': Erstes Computersystem, Nutzersystem
- 11,11': Web Browser
- 12: Eingabeeinrichtung, Tastatur, EDV-Maus
- 13: Anzeige, Monitor, Display
- 14: Speicher Nutzersystem
- 15: Drucker Nutzersystem
- 16: lnternetverbindung
- 20: Zweites Computersystem, Applikationsserver
- 21: Applikation
- 22: Speicher Applikationsserver
- 23: Bildbearbeitungseinheit
- 24: Protokolleinheit
- 30: Drucksystem
- 31: Drucker Drucksystem
- 32: Druckapplikation
- 40: Druckdatei
- 41,42,43: Bildmotiv
- 50: Erste Bilddatei, hohe Original-Auflösung
- 50": Bearbeitete erste Bilddatei, hohe Original-Auflösung
- 51,52: Erzeugte Bilddatei, geringere Auflösung
- 51',52',51",52": Bearbeitete Bilddatei, geringere Auflösung
- 60: Druckerzeugnis
- 70: Zweite Bilddatei, hohe Original-Auflösung
- 71,72: Erzeugte zweite Bilddatei, geringere Auflösung

## Patentansprüche

1. Verfahren zur Erzeugung einer Druckdatei (40), welche wenigstens ein Bildmotiv (41;42;43) enthält, wobei das Bildmotiv (41;42;43) über einen Web-Browser (11;11') wenigstens eines ersten Computersystems (10;10') vor der Erzeugung der Druckdatei (40) auf einer Anzeige (13) des ersten Computersystems (10:10') angezeigt und von einer Bildbearbeitungseinheit (23) graphisch bearbeitet wird, welche durch Auswahlbefehle und Bearbeitungsbefehle eines Nutzers an einer Eingabeeinrichtung (12) des ersten Computersystems (10;10') angesteuert wird, ,
**gekennzeichnet durch** folgende Verfahrensschritte:
a) Bereitstellen einer ersten Bilddatei (50), welche das Bildmotiv (41;42;43) in einer ersten Original-Auflösung enthält, **durch** eine Applikation (21) auf einem entfernt von dem ersten Computersystem (10;10') angeordneten zweiten Computersystem (20), und Erzeugen wenigstens einer weiteren Bilddatei (51;52), welche das Bildmotiv (41;42;43) in einer Auflösung enthält, die kleiner als die Auflösung der ersten Bilddatei (50) ist, **durch** die Applikation (21) auf dem zweiten Computersystem (20);
b) Speichern der ersten Bilddatei (50) und der wenigstens einen weiteren Bilddatei (51 ;52) in einem Speichermedium (22) in Verbindung mit dem zweiten Computersystem (20), und Zuordnen der wenigstens einen weiteren Bilddatei (51 ;52) zu Auswahlbefehlen und Speicherung dieser Zuordnung im Speichermedium (22);
c) Herstellen einer Internetverbindung zwischen dem ersten Computersystem (10;10') und dem zweiten Computersystem (20) über den Web Browser (11;11') des ersten Computersystems (10;10');
d) Erfassen von Auswahlbefehlen des Nutzers **durch** die Eingabeeinrichtung (12) des ersten Computersystems (10;10') und Übermittelung der Auswahlbefehle an eine Bildbearbeitungseinheit (23) des zweiten Computersystems (20) über die hergestellte Internatverbindung;
e) Auswerten der empfangenen Auswahlbefehle **durch** die Bildbearbeitungseinheit (23), wobei die Bildbearbeitungseinheit (23) bei der Auswertung anhand der im Speichermedium (22) hinterlegten Zuordnungen ermittelt, welche der wenigstens einen weiteren Bilddatei (51;52) den empfangenen Auswahlbefehlen zugeordnet ist und Festlegen dieser ermittelten Bilddatei (51 ;52) als Arbeitsdatei;
f) Übermittaln der **durch** die Auswertung **durch** die Bildbearbeitungseinheit (23) als Arbeitsdatei ermittelten Bilddatei (51;52) über die Internetverbindung und den Web Browser (11;11') an die Anzeige (13) des ersten Computersystems (10;10'); und anschließend
g) Erfassen von Bearbeitungsbefehlen des Nutzers **durch** die Eingabeeinrichtung (12) des ersten Computersystems (10;10') und Übermittelung der Bearbeitungsbefehle an die Bildbearbeitungseinheit (23) des zweiten Computersystems (20) über die hergestellte Internetverbindung;
h) Auswerten der empfangenen Bearbeitungsbefehle **durch** die Bildbearbeitungseinheit (23) und Durchführen der Bearbeitungsbefehle **durch** die Bildbearbeitungseinheit (23) auf der als Arbeitsdatei ermittelten Bilddatei (51;52), wobei eine bearbeitete Bilddatei (51';52') als neue Arbeitsdatei erzeugt wird;
i) Übermitteln der **durch** die Bildbearbeitungseinheit (23) bearbeiteten Bilddatei (51';52') als neue Arbeitsdatei über die Internetverbindung und den Web Browser (11;11') an die Anzeige (13);
j) Durchführen der Bearbeitungsbefehie **durch** die Bildbearbeitungseinheit (23) auf der ersten Bilddatei (50) mit Original-Auflösung und Erzeugung einer bearbeiteten Bilddatei (50") mit Original-Auflösung;
k) Erstellen einer Druckdatei (40) umfassend wenigstens das Bildmotiv (41 ;42;43) der bearbeiteten ersten Bilddatei (50") in Original-Auflösung, und
l) Übermitteln dieser Druckdatei (40) an eine Druckereinrichtung (31).

2. Verfahren nach Anspruch 1,
**dadurch gekennzeichnet,**
**dass** sich die Verfahrensschritte d) bis i) wenigstens einmal wiederholen, bevor die Verfahrensschritte j) bis I) erfolgen.

3. Verfahren nach Anspruch 2,
**dadurch gekennzeichnet,**
**dass** alle Bearbeitungsbefehle des Nutzers durch eine Protokolleinheit (24) der Applikation (21) protokolliert werden und auf der ersten Bilddatei (50) durchgeführt werden, sobald die Wiederholung wenigstens der Verfahrensschritte d) bis i) abgeschlossen ist.

4. Verfahren nach Anspruch 2,
**dadurch gekennzeichnet,**
**dass** jeder Bearbeitungsbefehl des Nutzers durch die Bildbearbeitungseinheit (23) parallel auf der als Arbeitsdatei ermittelten weiteren Bilddatei (51;52) und auf der ersten Bilddatei (50) in Original-Auflösung durchgeführt wird.

5. Verfahren nach einem der Ansprüche 1 bis 4,
**dadurch gekennzeichnet,**
**dass** wenigstens zwei weitere Bilddateien (51;52) mit unterschiedlichen Auflösungen, die jeweils kleiner sind als die Auflösung der ersten Bilddatei (50), durch die Applikation (21) auf dem zweiten Computersystem (20) erzeugt und im Speichermedium (22) hinterlegt werden.

6. Verfahren nach Anspruch 5,
**dadurch gekennzeichnet,**
**dass** Bearbeitungsbefehle, die durch die Bildbearbeitungseinheit (23) auf einer ersten Bilddatei (51) der wenigstens zwei weiteren Bilddateien (51;52) durchgeführt werden, parallel auf allen weiteren Bilddateien (52) der zwei weiteren Bilddateien (51 ;52) durchgeführt werden, und dass sich nach der Durchführung dieser Bearbeitungsbefehle durch die Bildbearbeitungseinheit (23) die Verfahrensschritte d) bis f) wiederholen, wobei die Auswertung der Auswahlbefehle ergibt, dass den empfangenen Auswahlbefehlen des Nutzers eine zweite Bilddatei (52) der wenigstens zwei weiteren Bilddateien (51 ;52) zugeordnet ist und diese bearbeitete zweite Bilddatei (52') als neue Arbeitsdatei über die Internetverbindung und den Web Browser (11;11') an die Anzeige (13) des ersten Computersystems (10;10') übermittelt wird.

7. Verfahren nach Anspruch 5,
**dadurch gekennzeichnet,**
**dass** Bearbeitungsbefehle, die durch die Bildbearbeitungseinheit (23) auf einer ersten Bilddatei (51) der wenigstens zwei weiteren Bilddateien (51;52) durchgeführt werden, durch eine Protokolleinheit (24) der Applikation (21) protokolliert werden, und dass sich nach der Durchführung der Bearbeitungsbefehle durch die Bildbearbeitungseinheit (23) die Verfahrensschritte d) bis f) wiederholen, wobei die Auswertung der Auswahlbefehie des Nutzers ergibt, dass den empfangenen Auswahlbefehlan eine zweite Bilddatei (52) der wenigstens zwei weiteren Bilddateien (51;52) zugeordnet ist, und dass die protokollierten Bearbeitungsbefehle von der Bildbearbeitungseinheit (23) auf der zweiten Bilddatei (52) durchgeführt werden und die bearbeitete zweite Bilddatei (52') als neue Arbeitsdatei über die Internetverbindung und den Web Browser (11;11') an die Anzeige (13) des ersten Computersystems (10:10') übermittelt wird.

8. Verfahren nach einem der Ansprüche 1 bis 7,
**dadurch gekennzeichnet,**
**dass** die Druckdatei (40) von einem Konverter der Applikation (21) erzeugt wird, wobei die Druckdatei (40) im pdf-Format erzeugt wird.

9. Verfahren nach einem der Ansprüche 1 bis 8,
**dadurch gekennzeichnet,**
**dass** die Druckdatei (40) zusätzlich zu dem wenigstens einen Bildmotiv (41;42;43) der Bilddatei (50") auch Textangaben umfasst.

10. Verfahren nach einem der Ansprüche 1 bis 9,
**dadurch gekennzeichnet,**
**dass** das Verfahren gemäß einem der Ansprüche 1 bis 9 über die Web-Browser (11;11') mehrerer Computersysteme (14;10') durchgeführt wird, wobei die erste Bilddatei (50) durch alle an den ersten Computersystemen (10;10') durch die jeweilige Eingabeeinrichtung (12) erfassten Bearbeitungsbefehle bearbeitet wird.

11. Verfahren nach Anspruch 10.
**dadurch gekennzeichnet,**
**dass** die Druckdatei (40) zusätzlich zu einem Bildmotiv (41) der bearbeiteten ersten Bilddatei (50) mit Original-Auflösung wenigstens das Bildmotiv (41;42) einer weiteren bearbeiteten Bilddatei (70") mit Original-Auflösung umfasst.
